# EUROPEAN PATENT SPECIFICATION

(11) **EP 3 205 565 B1**
(45) Date of publication and mention of the grant of the patent: **17.10.2018**
(21) Application number: 17154918.1
(22) Date of filing: 07.02.2017
(51) Int. Cl.: B62K 11/04, B62J 1/12, B62J 35/00, B62K 19/46, B62K 25/28

(54) **ELECTRIC COMPONENT LAYOUT STRUCTURE FOR SADDLE TYPE VEHICLE**
ELEKTRISCHE KOMPONENTENANORDNUNGSSTRUKTUR FÜR EIN SATTELFAHRZEUG
STRUCTURE D'AGENCEMENT DE COMPOSANT ÉLECTRIQUE POUR VÉHICULE À SELLE

(30) Priority: 10.02.2016 JP 2016023567
(43) Date of publication of application: 16.08.2017
(73) Proprietor: Honda Motor Co., Ltd., Minato-ku, Tokyo 107-8556 (JP)
(72) Inventor: Momma, Eikichi, Saitama, 351-0193 (JP); Kai, Kunihiro, Saitama, 351-0193 (JP); Makino, Souichiro, Saitama, 351-0193 (JP)
(74) Representative: Beder, Jens

(56) References cited:
- EP-A1- 1 864 900
- EP-A1- 2 511 164
- EP-A1- 2 703 272
- US-A1- 2010 061 058

## Description

The present invention relates to an electric component layout structure for a saddle type vehicle.

Conventionally, there has been known a structure wherein a fuel tank and a storage box are laid out in a forward-rearward relation under a seat of a saddle type vehicle (see, for example, Japanese Patent Laid-Open No. 1991-25089).

Document EP2703272A1, shows also a known electric component layout structure comprising a fuel tank, a storage box and a battery placed in between. Meanwhile, since a saddle type vehicle is considerably limited in space for mounting component parts, layout of comparatively large-sized electric component parts such as a battery needs an appropriate planning. In the conventional saddle type vehicle as mentioned above, the layout of the fuel tank and the storage box in the forward-rearward relation under the seat makes it difficult to dispose a battery under the seat. Therefore, it may be contemplated, for example, to dispose the battery at a front portion of the vehicle and inside a front cover; in that case, however, it is difficult to dispose other component parts inside the front cover.

The present invention has been made in consideration of the above-mentioned circumstances. Accordingly, it is an object of the present invention to make it possible to compactly lay out an electric component part in a saddle type vehicle wherein a fuel tank and a storage box are laid out in a forward-rearward relation under a seat.

In order to achieve the above object, according to the present invention, there is provided an electric component layout structure for a saddle type vehicle according to claim 1.

According to the present invention, the battery is disposed below the rear portion of the fuel tank and forward of the storage box, the battery is supported on the upper surface of the cross frame interconnecting the pair of left and right frames, and the regulator which rectifies the current to be supplied to the battery is disposed on the lower surface of the cross frame. By this configuration, the battery can be laid out through effective utilization of a space formed below the rear portion of the fuel tank and forward of the storage box, on the lower side of the seat, and the battery can be supported by the upper surface of the cross frame interconnecting the pair of left and right frames. Therefore, the battery can be compactly laid out under the seat. Further, the regulator can be compactly laid out while utilizing a space near the lower surface of the cross frame, and the battery and the regulator can be connected to each other through a short distance therebetween.

In the electric component layout structure for the saddle type vehicle as above, preferably, the saddle type vehicle as above is a vehicle having a leg passing space, and an air cleaner is disposed inside a front cover located forward of the leg passing space.

According to this configuration, the saddle type vehicle is a vehicle having the leg passing space, and the air cleaner is disposed inside the front cover located forward of the leg passing space. Since the battery is compactly laid out on the lower side of the seat, a vacant space is formed inside the front cover, so that the air cleaner can be disposed in this space. As a result, the leg passing space can be provided rearward of the front cover, whereby ease of getting on and off the saddle type vehicle can be enhanced.

In the electric component layout structure for the saddle type vehicle as above, preferably, an upper end of a cushion is disposed below the fuel tank and forward of the battery.

According to this configuration, since the upper end of the cushion is disposed below the fuel tank and forward of the battery, the battery can be compactly laid out through effective utilization of the space between the upper end of the cushion and the storage box.

In the electric component layout structure for the saddle type vehicle as above, preferably, a lid is provided for covering an opening provided in a front wall of the storage box, an upper surface of the battery is disposed at such a position as to face the opening, and the battery is mountable and demountable by way of the opening.

According to this configuration, the lid is provided for covering the opening provided in the front wall of the storage box, the upper surface of the battery is disposed at such a position as to face the opening, and the battery can be mounted and demounted via the opening. Therefore, the battery can be mounted and demounted by way of the storage box, so that good maintainability can be realized.

In the electric component layout structure for the saddle type vehicle, the storage box has a downwardly projecting triangular shape in side view.

According to this configuration, since the storage box has a downwardly projecting triangular shape in side view, a space for laying out the battery can be easily secured on the front side of the storage box. A rear surface of the storage box having the downwardly projecting triangular shape can be utilized also as a mud guard. Furthermore, the downwardly projecting triangular shape enables easy accommodation of a helmet in the storage box.

In the electric component layout structure for the saddle type vehicle as above, preferably, a rear arm is provided which is swingable upward and downward about a pivot shaft provided at a front end portion thereof, and the pivot shaft is disposed between an engine and the cushion.

According to this configuration, the rear arm which can be swung upward and downward about the pivot shaft provided at the front end portion thereof is provided, and the pivot shaft is disposed between the engine and the cushion. Therefore, the pivot shaft can be compactly laid out while effectively utilizing the space between the engine and the cushion.

In the electric component layout structure for the saddle type vehicle as above, preferably, the battery is located between the pair of left and right frames, and the battery and the frames overlap with each other in side view.

According to this configuration, since the battery is located between the pair of left and right frames and the battery and the frames overlap with each other in side view, the battery can be effectively protected with the frames.

In the electric component layout structure for the saddle type vehicle as above, preferably: an upper end of a cushion is disposed below the fuel tank and forward of the battery, and the storage box has a downwardly projecting triangular shape in side view; the upper end of the cushion is connected to a cushion bracket; the cross frame is disposed with the upper surface thereof inclined rearwardly upward in side view; the battery is disposed between a rear surface of the cushion bracket and a front wall of the storage box; and the rear surface and the front wall are disposed to be orthogonal to the upper surface of the cross frame in side view.

According to this configuration, the upper end of the cushion is connected to the cushion bracket, the cross frame is disposed with its upper surface inclined rearwardly upward in side view, the battery is disposed between the rear surface of the cushion bracket and the front wall of the storage box, and the rear surface of the cushion bracket and the front wall of the storage box are disposed to be orthogonal to the upper surface of the cross frame in side view. Therefore, the space between the cushion bracket and the storage box having the downwardly projecting triangular shape can be secured to be large, so that the battery can be easily laid out.

In the electric component layout structure for the saddle type vehicle according to the present invention, the battery and the regulator can be compactly laid out under the seat, and the battery and the regulator can be connected to each other through a short distance therebetween.

In addition, the air cleaner can be disposed in the vacant space formed inside the front cover, and the leg passing space can be provided rearward of the front cover, whereby ease of getting on and off the saddle type vehicle can be enhanced.

Further, the battery can be compactly laid out through effective utilization of the space between the upper end of the cushion and the storage box.

Besides, the battery can be mounted and demounted via the opening of the storage box, so that good maintainability is realized.

Further, since the storage box has a downwardly projecting triangular shape, a space for disposing the battery can be easily secured, and the storage box can also be utilized as a mud guard. Besides, a helmet can be easily accommodated in the storage box.

In addition, the pivot shaft can be compactly laid out.

Besides, the battery can be effectively protected with the frames.

Further, a large space can be secured between the cushion bracket and the storage box, so that it is easy to lay out the battery.
FIG. 1 is a right side view of a motorcycle according to an embodiment of the present invention.
FIG. 2 is a left side view of a body frame.
FIG. 3 is a plan view, as viewed from above, of the body frame.
FIG. 4 is a plan view, as viewed from above, of the motorcycle.
FIG. 5 is a sectional view of the motorcycle, in a vertical section at the center in the transverse direction.
FIG. 6 is a left side view of the periphery of a seat.
FIG. 7 is a sectional view of the periphery of a fuel tank and a storage box, in a vertical section at the center in the transverse direction.
FIG. 8 is a plan view, as viewed from above, of the storage box in a state where the seat is opened.
FIG. 9 is an enlarged sectional view in which a fixing portion for a regulator in FIG. 7 is illustrated in an enlarged form.

An embodiment of the present invention will be described below, referring to the drawings. Note that the directions such as forward, rearward, leftward, rightward, upward and downward directions in the following description are coincident with the directions relative to a vehicle body, unless specified otherwise. In addition, symbol FR in the drawings indicates the vehicle body front side, symbol UP indicates the vehicle body upper side, and symbol LH indicates the vehicle body left-hand side.

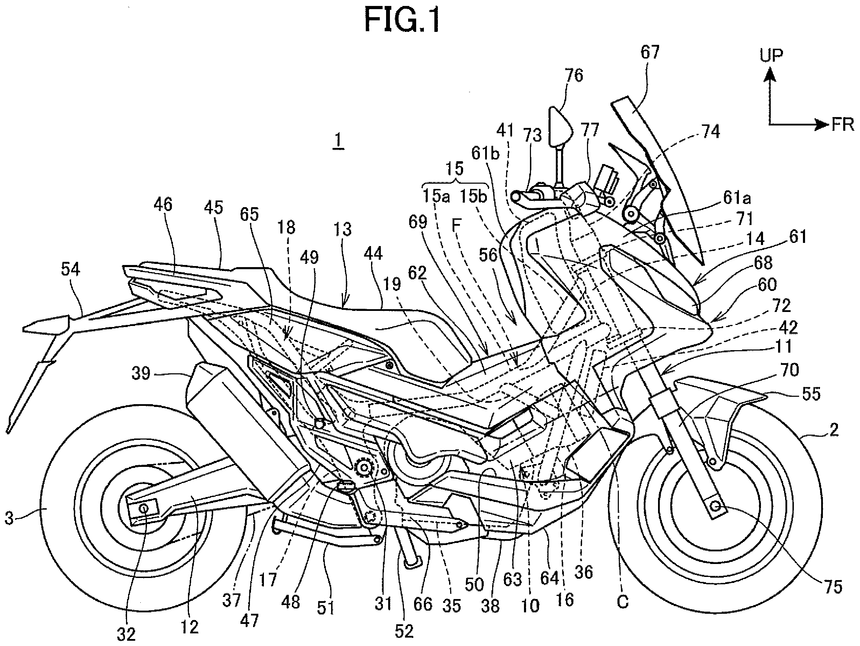

FIG. 1 is a right side view of a motorcycle according to an embodiment of the present invention. Note that in the side view in the following description, only one of a pair of left and right components is illustrated.

The motorcycle 1 is a vehicle wherein an engine 10 as a power unit is supported on a body frame F, a steering system 11 which supports a front wheel 2 in a steerable manner is supported on a front end of the body frame F in such a manner as to enable steering, and a swing arm 12 (rear arm) which supports a rear wheel 3 is provided on a rear portion side of the body frame F. The motorcycle 1 is a saddle type vehicle wherein a riding seat 13 on which a rider is to be seated astride is provided above a rear portion of the body frame F.

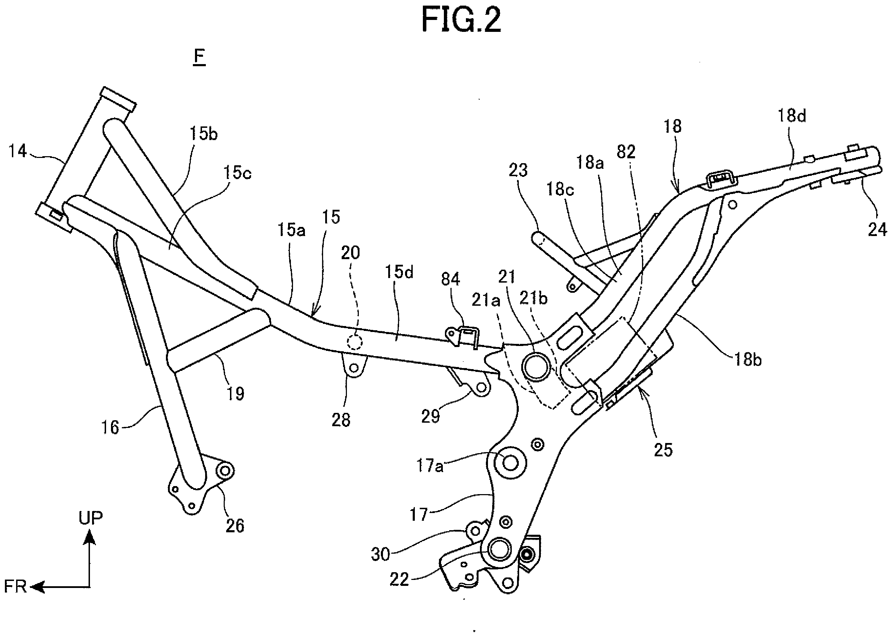

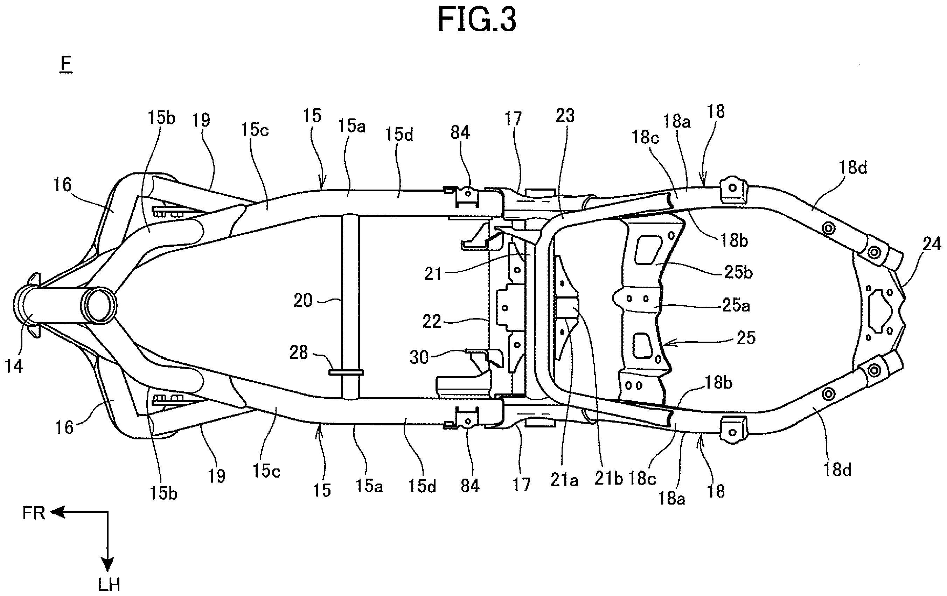

FIG. 2 is a left side view of the body frame F. FIG. 3 is a plan view, as viewed from above, of the body frame F.

Referring to FIGS. 1 to 3, the body frame F includes: a head pipe 14 provided at a front end; a pair of left and right main frames 15, 15 extending rearwardly downward from a rear portion of the head pipe 14; a pair of left and right down frames 16, 16 extending toward rear lower sides from front end portions of the main frames 15, 15; a pair of left and right pivot frames 17, 17 extending downward from rear ends of the main frames 15, 15; and a pair of left and right seat frames 18, 18 (frames) extending rearwardly upward from upper portions of the pivot frames 17, 17 to vehicle rear end portions.

The main frames 15, 15 include: main frame main body portions 15a, 15a extending downwardly rearward at a comparatively moderate inclination from a lower portion of the head pipe 14; and reinforcement frame portions 15b, 15b which connect an upper portion of the head pipe 14 to front portions of the main frame main body portions 15a, 15a. The main frame main body portions 15a, 15a include: frame front portions 15c, 15c which extend from the head pipe 14 and the interval of which in the transverse direction is greater on the rearer side in plan view; and frame rear portions 15d, 15d extending rearward, substantially in parallel to each other, from rear ends of the frame front portions 15c, 15c.

In addition, the body frame F includes a pair of left and right connection frames 19, 19 which connect intermediate portions in the longitudinal vehicle direction of the main frame main body portions 15a, 15a to the down frames 16, 16.

The seat frames 18, 18 include upper seat frame portions 18a, 18a which extend rearwardly upward from upper end portions of the pivot frames 17, 17, and lower seat frame portions 18b, 18b which extend rearwardly upward from the pivot frames 17, 17 on the lower side of the upper seat frame portions 18a, 18a. The upper seat frame portions 18a, 18a include front portions 18c, 18c which extend substantially in parallel to the lower seat frame portions 18b, 18b in a side view, and rear portions 18d, 18d which bend at rear ends of the front portions 18c, 18c and extend rearwardly upward at a moderate inclination as compared to the front portions 18c, 18c. Rear ends of the lower seat frame portions 18b, 18b are connected to the rear portions 18d, 18d of the upper seat frame portions 18a, 18a.

The pivot frames 17, 17 are provided with pivot holes 17a, 17a in vertically intermediate portions thereof.

The body frame F includes: a front-side cross frame 20 which interconnects front portions of the frame rear portions 15d, 15d of the main frame main body portions 15a, 15a in the transverse direction; a middle-side cross frame 21 which interconnects upper end portions of the pivot frames 17, 17 in the transverse direction; and a lower-side cross frame 22 which interconnects lower end portions of the pivot frames 17, 17 in the transverse direction.

In addition, the body frame F includes: a storage box support frame 23 which interconnects the front portions 18c, 18c of the upper seat frame portions 18a, 18a in the transverse direction; a rear end side cross frame 24 which interconnects rear end portions of the upper seat frame portions 18a, 18a in the transverse direction; and a cross frame 25 which interconnects front portions of the lower seat frame portions 18b, 18b in the transverse direction.

The body frame F is provided with a front-side engine hanger 26 at lower end portions of the down frames 16, 16, with an upper-side engine hanger 28 at the front-side cross frame 20, with a rear-side engine hanger 29 at rear end portions of the main frame main body portions 15a, 15a, and with a lower-side engine hanger 30 at the lower-side cross frame 22.

As illustrated in FIG. 1, the swing arm 12 has its front end portion pivoted on a pivot shaft 31 connecting the left and right pivot frames 17, 17 in the transverse direction, and is swung upward and downward about the pivot shaft 31. The pivot shaft 31 is supported by the pivot holes 17a, 17a (FIG. 2). The rear wheel 3 is rotatably supported on a rear wheel axle 32 inserted in a rear end portion of the swing arm 12.

The engine 10 is mounted in the manner of being suspended from the body frame F forward of the pivot frames 17, 17.

The engine 10 includes a crankcase 35 which supports a crankshaft (not illustrated) extending in the transverse direction, and a cylinder portion 36 which extends forwardly upward from a front portion of the crankcase 35. The crankcase 35 is located below the frame rear portions 15d, 15d of the main frames 15, 15. The cylinder portion 36 extends forwardly upward along the main frames 15, 15, and its front portion is located between the left and right down frames 16, 16 and between the left and right connection frames 19, 19. A transmission is accommodated in a rear portion of the crankcase 35.

The engine 10 is supported on the body frame F through the front-side engine hanger 26, the upper-side engine hanger 28, the rear-side engine hanger 29 and the lower-side engine hanger 30 which are illustrated in FIG. 2.

The engine 10 is an engine which is inclined forward such that a cylinder axis C of the cylinder portion 36 is nearer to the horizontal direction than to the vertical direction, and a space is secured above the engine 10.

An output of the engine 10 is transmitted to the rear wheel 3 by a chain 37 arranged between an output shaft (not illustrated) of the engine 10 and the rear wheel 3.

An exhaust pipe 38 of the engine 10 is led out downward from a cylinder head of the cylinder portion 36, extends rearward through the lower side of the engine 10, and is connected to a muffler 39 on the right side of the swing arm 12.

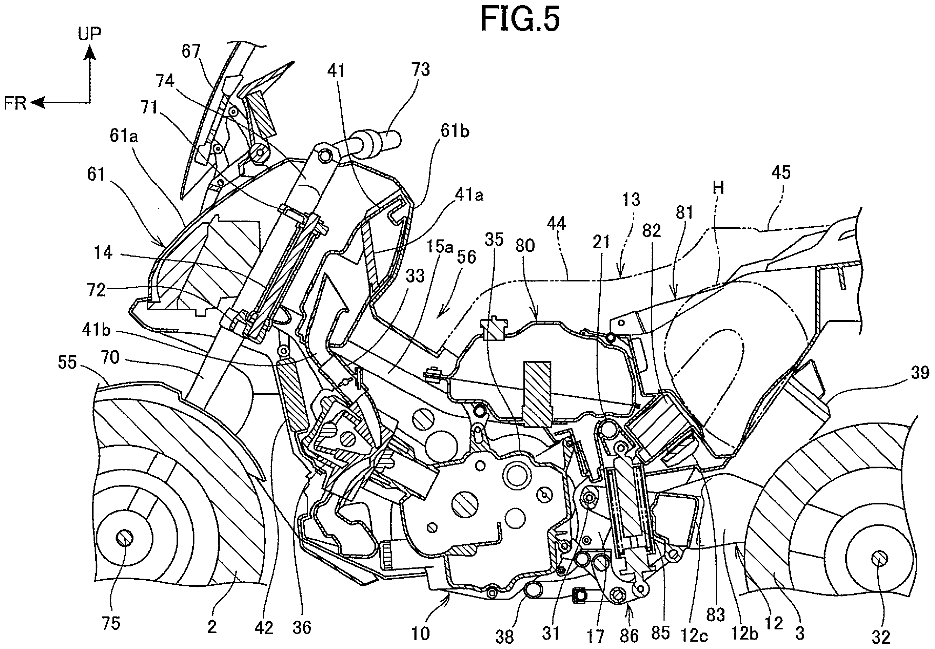

An air cleaner case 41 (air cleaner) for cleaning air to be supplied to the engine 10 is disposed rearward of the head pipe 14, above front portions of the main frames 15, 15. The air cleaner case 41 is provided therein with a filter 41a. An intake duct (not illustrated) is provided at an upper end portion of the air cleaner case 41. Air having passed through the air cleaner case 41 flows into the cylinder head of the cylinder portion 36, with its flow rate being regulated by a throttle body 33 (FIG. 5).

A radiator 42 of the engine 10 is disposed forward of the cylinder portion 36, below the head pipe 14.

The seat 13 is integrally provided with a front seat 44 (main seat) for a driver, and a rear seat 45 (tandem seat) for a passenger which seat is one step higher than the front seat 44.

The front seat 44 is disposed above rear portions of the main frames 15, 15 and above the pivot frames 17, 17. In addition, the front seat 44 is located above a rear portion of the crankcase 35.

The rear seat 45 is disposed above rear portions of the seat frames 18, 18. Grip portions 46, 46 to be gripped by the passenger seated on the rear seat 45 are each provided on the left and right sides of the rear seat 45.

A pair of left and right plate-shaped step holders 47, 47 are provided on outside surfaces of the pivot frames 17, 17. A pair of left and right sub steps 48, 48 for the driver and a pair of left and right passenger steps 49, 49 for the passenger are each supported by the step holders 47, 47. A pair of left and right main steps 50, 50 for the driver are provided on front lower sides of the front seat 44.

A main stand 51 is connected to lower portions of the pivot frames 17, 17. A side stand 52 is provided at a left end portion of a lower portion of the body frame F.

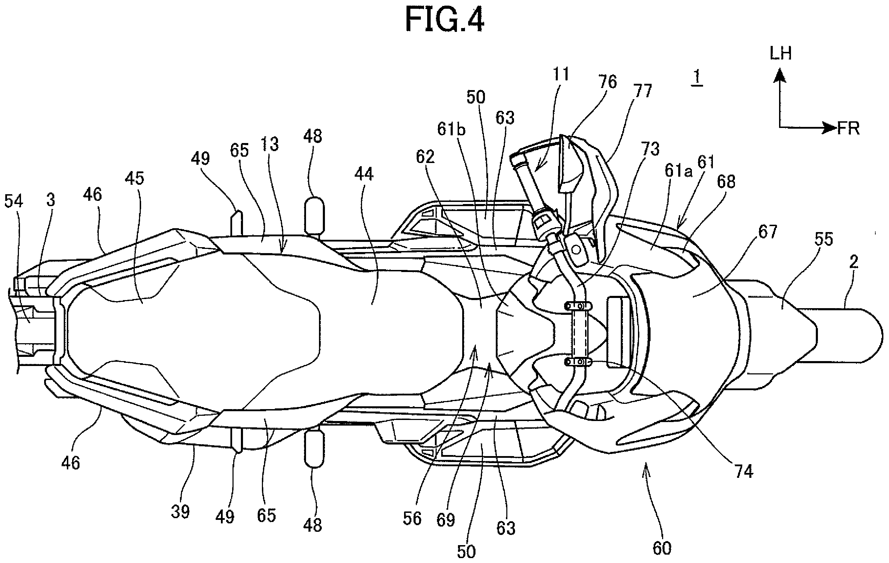

FIG. 4 is a plan view, as viewed from above, of the motorcycle 1. Note that in FIG. 4, a configuration on a right end portion side of a bar handle 73 described later is not illustrated.

As illustrated in FIGS. 1 and 4, the motorcycle 1 is provided with a body cover 60 which covers the vehicle body. The body cover 60 includes: a front cover 61 which covers the head pipe 14 and an upper portion of the steering system 11 from the front and rear sides and from the left and right sides; a seat under cover 62 which covers the main frames 15, 15 from the upper side and from the left and right sides, rearward of a lower portion of the front cover 61; and a pair of left and right middle side surface covers 63, 63 which cover the engine 10 and a rear portion of the body frame F from lateral sides, below the seat under cover 62.

Besides, the body cover 60 includes: an under cover 64 which covers the engine 10 from the lower side; a pair of left and right rear covers 65, 65 which cover the lower side of the seat 13 from lateral sides, rearward of the seat under cover 62; and a pair of left and right frame covers 66, 66 which cover a lower portion of a rear portion of the engine 10 and lower portions of the pivot frames 17, 17 from lateral sides.

Specifically, the front cover 61 includes a front-surface cover 61a which covers the head pipe 14 and an upper portion of the steering system 11 from the front side and from the left and right sides, and a rear-surface cover 61b which covers the head pipe 14 and the upper portion of the steering system 11 from the rear side.

The front-surface cover 61a is provided with a plate-shaped windscreen 67 which extends upward and downward. Headlights 68 are provided at the front-surface cover 61a.

In addition, the motorcycle 1 includes a rear fender 54 which covers the rear wheel 3 from the upper side, and a front fender 55 which covers the front wheel 2 from the upper side.

A front portion of the seat under cover 62 and front portions of the middle side surface covers 63, 63 are mated with each other in an upper-lower relation, to form a center tunnel portion 69 having a tunnel-like shape with an inverted U-shaped section. A front portion of the body frame F and the cylinder portion 36 are accommodated inside the center tunnel portion 69.

An upper surface of the center tunnel portion 69 is disposed at a position lower than an upper surface of the front seat 44, whereby a downwardly hollowed leg passing space 56 is formed between a front surface of the front seat 44 and the rear-surface cover 61b. The driver to be seated on the front seat 44 can easily get on and get off the motorcycle 1 since the driver can pass his/her leg through the leg passing space 56.

The steering system 11 includes: a steering shaft (not illustrated) rotatably supported on the head pipe 14; a pair of left and right front forks 70, 70 which are disposed on the left and right sides of the front wheel 2 and support the front wheel 2; a top bridge 71 which is fixed to an upper end of the steering shaft and connects the left and right front forks 70, 70 to each other; and a bottom bridge 72 which is fixed to a lower end of the steering shaft and connects the left and right front forks 70, 70 to each other. In addition, the steering system 11 includes the bar handle 73 provided above the front forks 70, 70 as a steering, and a handle holder 74 which fixes the bar handle 73 to the top bridge 71.

The front wheel 2 is rotatably supported on a front wheel axle 75 arranged between lower end portions of the front forks 70, 70.

The bar handle 73 is provided thereon with a pair of left and right rear view mirrors 76, 76 and a pair of left and right knuckle guards 77, 77.

FIG. 5 is a sectional view of the motorcycle 1, in a vertical section at the center in the transverse direction.

As illustrated in FIG. 5, the air cleaner case 41 is accommodated inside the front cover 61, and is located forward of the leg passing space 56. Specifically, the air cleaner case 41 is disposed between the head pipe 14 and the rear-surface cover 61b.

The air cleaner case 41 is formed in a vertically elongated box-like shape such as to lie along the head pipe 14, and its lower portion is disposed between the left and right main frames 15, 15. An upper portion of the air cleaner case 41 extends upward to above the leg passing space 56, and is located rearward of the top bridge 71.

The air cleaner case 41 is connected to the throttle body 33 by a connecting tube 41b which extends rearwardly downward from a lower end portion of the air cleaner case 41.

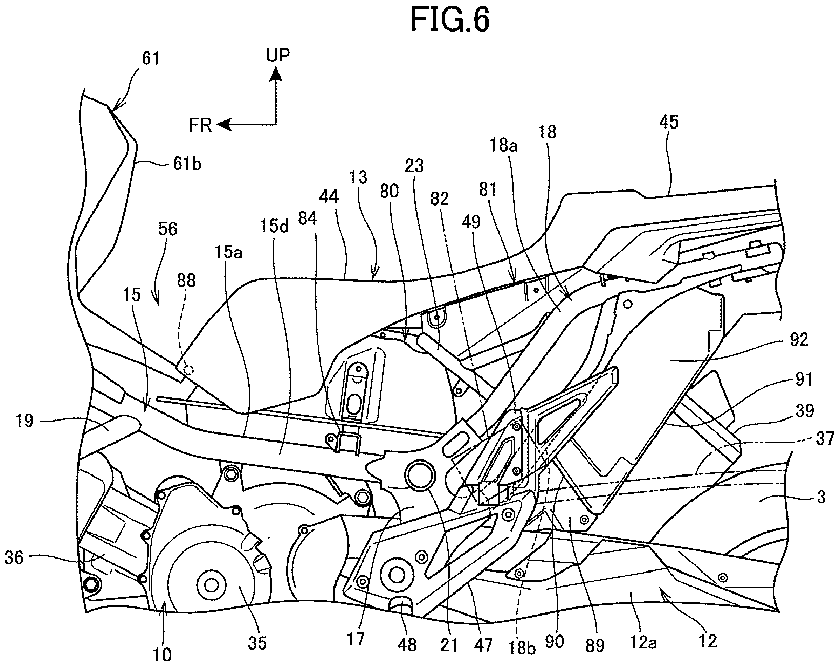

FIG. 6 is a left side view of the periphery of the seat 13. In FIG. 6, that portion of the body cover 60 which is located under the seat 13 is not illustrated. Besides, in FIG. 6, the passenger step 49 is in a stored state by being turned to the side of the seat frame 18 above.

As illustrated in FIGS. 5 and 6, the motorcycle 1 includes a fuel tank 80 located under the seat 13, a storage box 81 located under the seat 13 and rearward of the fuel tank 80, a battery 82 (electric component) disposed below a rear portion of the fuel tank 80 and forward of the storage box 81, and a regulator 83 (electric component) disposed below the battery 82.

The fuel tank 80 is disposed, in regard of the vertical direction, between the front seat 44 and the frame rear portions 15d, 15d of the main frames 15, 15. In addition, the fuel tank 80 is disposed, in regard of the transverse direction, between the left and right frame rear portions 15d, 15d of the main frames 15, 15. The fuel tank 80 has its lower portion supported by a tank fixing portion 84 provided on upper surfaces of the frame rear portions 15d, 15d.

The storage box 81 is disposed rearward of and in line with the fuel tank 80, and is located between the left and right seat frames 18, 18.

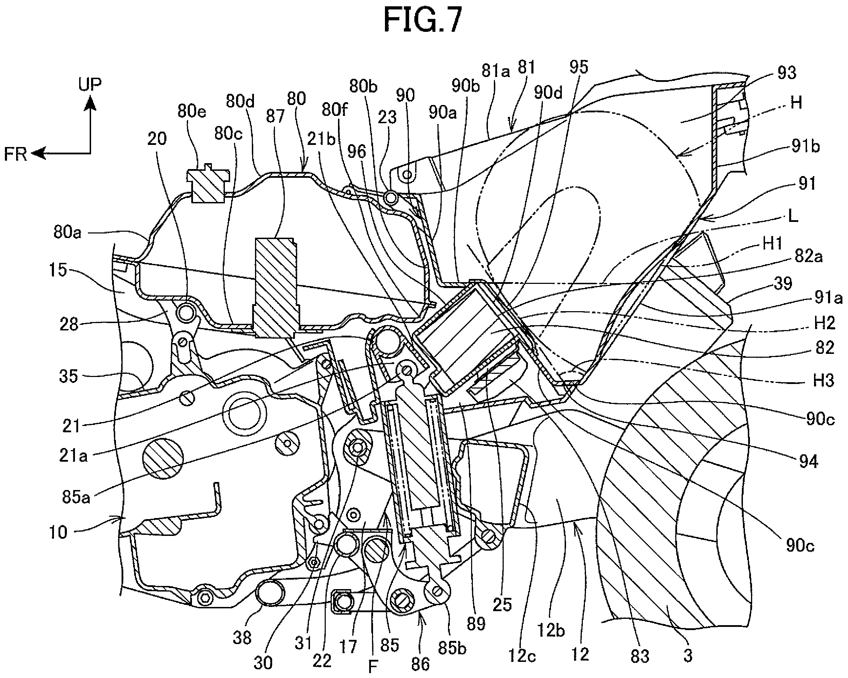

FIG. 7 is a sectional view of the periphery of the fuel tank 80 and the storage box 81, in a vertical section at the center in the transverse direction.

As depicted in FIG. 7, the swing arm 12 is located below a rear portion of the fuel tank 80 and the storage box 81. The swing arm 12 is provided with a pair of arm portions 12a, 12b (for the arm portion 12a on the left side, see FIG. 6) located respectively on the left and right sides of the rear wheel 3, and a cross member 12c interconnecting the arm portions 12a, 12b in the transverse direction at a position between the pivot shaft 31 (at the front end of the swing arm 12) and the rear wheel 3.

The swing arm 12 is suspended from the body frame F through a tubular cushion 85 which extends upward and downward. The cushion 85 is disposed in a central area in the transverse direction.

An upper end 85a of the cushion 85 is connected to a cushion bracket 21a which extends downward from the middle-side cross frame 21.

The cushion 85 extends below the swing arm 12 by passing between the pivot shaft 31 and the cross member 12c and between the left and right arm portions 12a, 12b.

A lower end 85b of the cushion 85 is connected to the swing arm 12 and the body frame F through a link mechanism 86 located below the swing arm 12.

The pivot shaft 31 is disposed, in regard of the longitudinal vehicle direction, between the crankcase 35 and the cushion 85.

The fuel tank 80 is formed in a tank shape elongated more in the longitudinal vehicle direction than in the transverse direction. A front surface 80a of the fuel tank 80 is located below a front edge of the front seat 44 and above a front portion of the crankcase 35. A rear surface 80b of the fuel tank 80 is located rearward of the middle-side cross frame 21 and forward of the storage box 81. A lower surface 80c of the fuel tank 80 is located above the front-side cross frame 20 and the middle-side cross frame 21. A fuel filler 80e is provided at a front portion of an upper surface 80d of the fuel tank 80. Inside the fuel tank 80, a fuel pump 87 is provided at the lower surface 80c of the fuel tank 80.

The middle-side cross frame 21, the cushion bracket 21a and the upper end 85a of the cushion 85 are located below a rear portion of the fuel tank 80.

As depicted in FIGS. 2, 3 and 7, the cushion bracket 21a extends rearwardly downward such that a clearance is secured between the pivot shaft 31 and the cushion 85. For this reason, a rear surface 21b of the cushion bracket 21a is inclined rearwardly downward.

The storage box 81 is formed in a box shape provided with an upper-surface opening 81a for opening substantially the whole area of the storage box 81 on the upper surface. The storage box 81 has such a capacity that a full-face type helmet H can be accommodated therein. The upper-surface opening 81a of the storage box 81 and the fuel tank 80 are covered by the seat 13 from above. The seat 13 is provided to be turnable about a hinge 88 (FIG. 6) provided at a front end portion thereof. When the seat 13 is opened by turning about the hinge 88, the interior of the storage box 81 is exposed to the upper side.

A front portion of the storage box 81 is supported by a storage box support frame 23.

The storage box 81 is formed in a downwardly projecting triangular shape in a side view, and includes a storage box front wall 90 (front wall) extending rearwardly downward, a storage box rear wall 91 extending rearwardly upward from a lower end portion of the storage box front wall 90, and left and right side walls 92, 93 (for the side wall 92 on the left side, see FIG. 6). The storage box 81 is provided with a bottom portion 94 which connects a lower end of the storage box front wall 90 and a lower end of the storage box rear wall 91 to each other. The bottom portion 94 constitutes a vertex portion of the triangular shape. The bottom portion 94 may be substantially horizontal or may have a downwardly projecting arcuate shape. In addition, the bottom portion 94 may be pointed in shape.

The bottom portion 94 of the storage box 81 is located below the lower surface 80c of the fuel tank 80, and is located at such a position as to overlap with the cross frame 25, in the vertical direction. Besides, the bottom portion 94 of the storage box 81 is located between the cross frame 25 and the rear wheel 3, in the longitudinal vehicle direction.

Specifically, the storage box front wall 90 includes: an upper front wall 90a which extends downward along the rear surface 80b of the fuel tank 80 from the side of the upper-surface opening 81a; a rearwardly extending portion 90b which extends rearward substantially horizontally from a lower end of the upper front wall 90a; and a lower front wall 90c which extends rearwardly downward, in the posture of being inclined forward more than the upper front wall 90a, from a rear end of the rearwardly extending portion 90b.

The lower front wall 90c is formed in its upper portion with an opening 90d having such a size that the battery 82 can be passed therethrough. An upper end of the opening 90d is located above a rear end 80f of the lower surface 80c of the fuel tank 80.

The opening 90d is shut with a lid 95 which is provided inside the storage box 81. The lid 95 is detachably fixed to the storage box front wall 90 by a bolt, for example. In addition, the lid 95 may be provided in a freely openable manner by a hinge or the like.

A battery cover 96 for covering the battery 82 is connected to the lower front wall 90c of the storage box 81. The battery cover 96 extends forwardly downward in continuity with the opening 90d. When the lid 95 is open, the battery 82 can be put into and out of the battery cover 96 through the opening 90d.

The storage box rear wall 91 includes a lower rear wall 91a extending rearwardly upward from the bottom portion 94, and an upper rear wall 91b extending upward substantially vertically from an upper end of the lower rear wall 91a. The lower rear wall 91a extends upward above the lower front wall 90c.

In side view, when a horizontal imaginary line L is extended rearward from an upper end of the lower front wall 90c, a substantially isosceles triangle is formed by the lower front wall 90c, the lower rear wall 91a and the imaginary line L.

With the storage box 81 thus formed in a downwardly projecting triangular shape in side view, it is easy to accommodate a full-face type helmet H therein. Specifically, the full-face type helmet H has a structure wherein an angle H3 formed between a bottom side portion H1 provided with an opening through which the wearer's head is to be passed and a front side portion H2 provided with a shield is an acute angle. When the shape of the storage box 81 is made to be a triangle projecting downward in side view according to the angle H3, therefore, the front side portion H2 and the bottom side portion H1 can be supported by the lower front wall 90c and the lower rear wall 91a. Consequently, the helmet H can be favorably accommodated in the storage box 81, with the front side portion H2 oriented forward.

In addition, the storage box rear wall 91 of the storage box 81 extends rearwardly upward, on the upper side of the rear wheel 3. Therefore, the storage box rear wall 91 functions as a fender for receiving splashes of mud from the rear wheel 3.

In this embodiment, since the storage box front wall 90 of the storage box 81 is inclined rearwardly downward, a space can be secured below a rear portion of the fuel tank 80 and forward of the storage box front wall 90. In addition, since the battery 82 is disposed in this space, the battery 82 can be laid out in a compact fashion.

The cross frame 25 is located below the fuel tank 80 and between the storage box front wall 90 and the pivot frames 17, 17 in regard of the longitudinal vehicle direction, and the battery 82 is supported by the cross frame 25.

Referring to FIGS. 2, 3 and 7, the cross frame 25 is a plate-shaped metallic frame which is elongated in the transverse direction. The cross frame 25 is disposed in the state of being inclined rearwardly upward in side view.

The cross frame 25 is disposed in an orientation substantially orthogonal to the rear surface 21b of the cushion bracket 21a, which extends rearwardly downward, in side view. In addition, the cross frame 25 is disposed in an orientation substantially orthogonal to the lower front wall 90c (FIG. 7), which extends rearwardly downward, in side view.

Besides, the cross frame 25 is provided, at a central portion in the transverse direction, with a downwardly projecting portion 25a which is one step recessed downward.

The battery 82 is formed in the shape of a rectangular parallelepiped block, and is supported on an upper surface 25b of the cross frame 25 in the state of being covered with the battery cover 96. Since the battery 82 is supported in the state of being mounted on the upper surface 25b of the cross frame 25, it is in a posture of being inclined rearwardly upward. An upper portion of the battery 82 is located above the lower surface 80c of the fuel tank 80.

The battery 82 is laid out between the rear surface 21b of the cushion bracket 21a and the lower front wall 90c. Since the rear surface 21b and the lower front wall 90c are substantially orthogonal to the cross frame 25, the battery 82 having the rectangular parallelepiped shape can be laid out while efficiently utilizing the space between the rear surface 21b and the lower front wall 90c. In addition, since the battery 82 is supported by the cross frame 25 which interconnects the left and right lower seat frame portions 18b, 18b, the battery 82 can be firmly supported.

As depicted in FIGS. 2 and 6, the battery 82 is located between the left and right seat frames 18, 18, and is laid out at such a position as to overlap with the lower seat frame portions 18b, 18b in side view. For this reason, the battery 82 can be protected by covering it with the lower seat frame portions 18b, 18b.

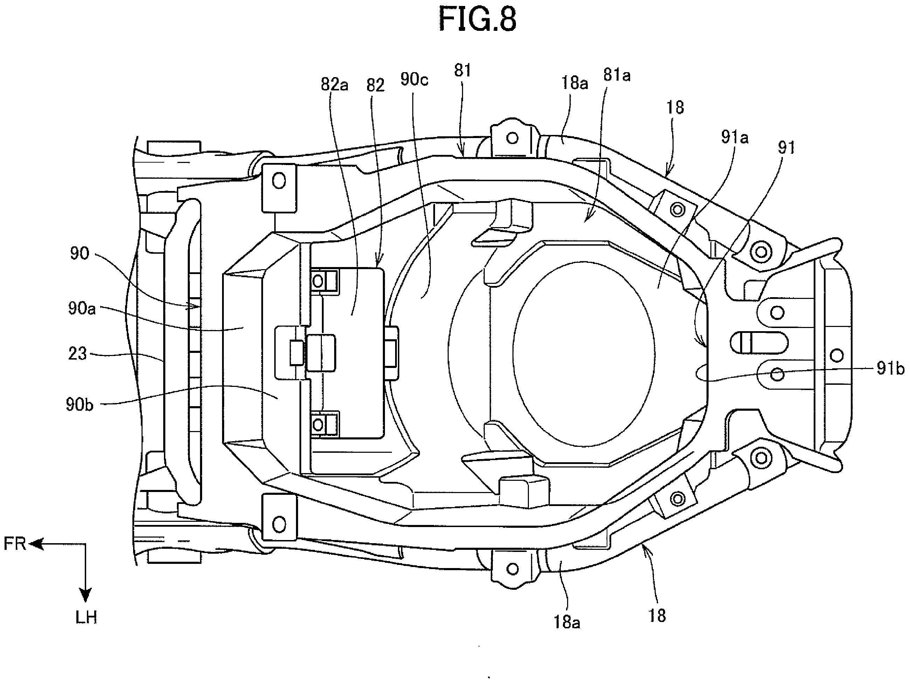

FIG. 8 is a plan view, as viewed from above, of the storage box 81 in a state where the seat 13 is opened.

Referring to FIGS. 7 and 8, an upper surface 82a of a rear portion of the battery 82 is opposed to the opening 90d and proximate to the lid 95. When the lid 95 is opened, the upper surface 82a of the battery 82 is exposed to the space inside the storage box 81 via the opening 90d. As a result, the battery 82 can be mounted and demounted by moving it in the longitudinal vehicle direction by way of the opening 90d; therefore, good maintainability can be realized.

In addition, even in the case of mounting or demounting the battery 82 by moving it in the longitudinal vehicle direction, the upper surface 82a can be easily confirmed from above since the battery 82 is inclined; thus, good maintainability can be realized.

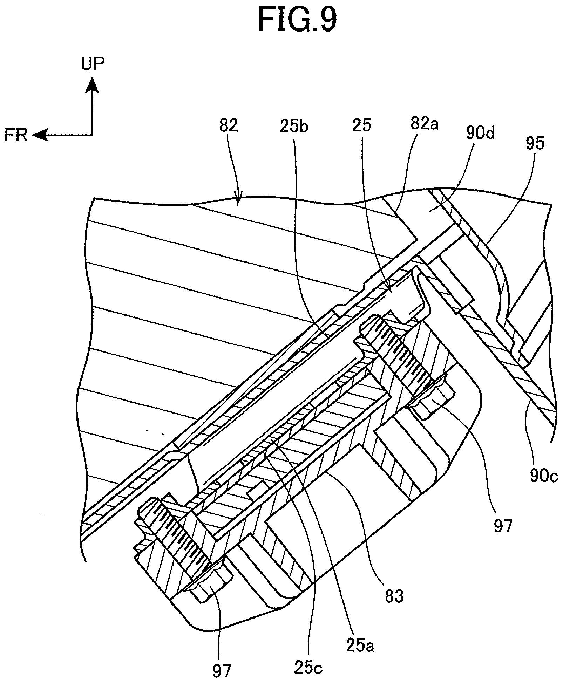

FIG. 9 is an enlarged sectional view in which a fixing portion for the regulator 83 in FIG. 7 is illustrated in an enlarged form.

Referring to FIGS. 7 and 9, the regulator 83 is fixed to a lower surface of the cross frame 25. Specifically, the regulator 83 is fixed to a lower surface 25c of the downwardly projecting portion 25a by a plurality of bolts 97 inserted from below. The regulator 83 rectifies a current which is generated by the engine 10 and to be supplied to the battery 82.

Since the regulator 83 is thus fixed to the lower surface of the cross frame 25, the distance between the battery 82 disposed on the upper surface 25b of the cross frame 25 and the regulator 83 can be shortened, so that a wiring for connecting the regulator 83 and the battery 82 to each other can be shortened.

In addition, since the regulator 83 is fixed to the downwardly projecting portion 25a and thereby separated from the battery 82, heat of the regulator 83 can be radiated efficiently. Further, since the regulator 83 is fixed in firm connect with the cross frame 25 which is made of metal, the heat can be radiated efficiently.

A cover 89 for covering the regulator 83 at least from a lateral side is provided forward of the lower front wall 90c.

As has been described above, according to the embodiment of the present invention, the motorcycle 1 includes the riding seat 13, the fuel tank 80 located under the seat 13, the storage box 81 located under the seat 13 and rearward of the fuel tank 80, and the battery 82, wherein the battery 82 is disposed below a rear portion of the fuel tank 80 and forward of the storage box 81, the battery 82 is supported on the upper surface 25b of the cross frame 25 which connects the pair of left and right seat frames 18, 18 to each other, and the regulator 83 which rectifies the current supplied to the battery 82 is disposed on the lower surface 25c of the cross frame 25. Owing to this configuration, the battery 82 can be laid out while effectively utilizing the space formed below the rear portion of the fuel tank 80 and forward of the storage box 81, on the lower side of the seat 13, and the battery 82 can be supported by the upper surface 25b of the cross frame 25 which connects the pair of left and right seat frames 18, 18 to each other. Therefore, the battery 82 can be laid out under the seat 13 in a compact fashion. Further, the regulator 83 can be compactly laid out by through effective utilization of the space near the lower surface 25c of the cross frame 25, and the battery 82 and the regulator 83 can be connected to each other with a short distance therebetween.

In addition, the motorcycle 1 is a vehicle provided with the leg passing space 56, and the air cleaner case 41 is disposed inside the front cover 61 located forward of the leg passing space 56. Since the battery 82 is compactly disposed under the seat 13, a vacant space is formed inside the front cover 61, and the air cleaner case 41 can be laid out in this space. As a result, the leg passing space 56 can be provided rearward of the front cover 61, whereby ease of getting on and off the motorcycle 1 can be enhanced.

Further, since the upper end 85a of the cushion 85 is disposed below the fuel tank 80 and forward of the battery 82, the battery 82 can be compactly laid out by effectively utilizing the space between the upper end 85a of the cushion 85 and the storage box 81.

Besides, the lid 95 is provided for covering the opening 90d provided in the storage box front wall 90 of the storage box 81, the upper surface 82a of the battery 82 is disposed at such a position as to face the opening 90d, and the battery 82 can be mounted and demounted by way of the opening 90d. Therefore, the battery 82 can be mounted and demounted via the storage box 81, and good maintainability is realized.

In addition, since the storage box 81 has a downwardly projecting triangular shape in side view, a space for laying out the battery 82 therein can be easily secured on the front side of the storage box 81. Further, the rear surface of the storage box 81 having the downwardly projecting triangular shape can be utilized as a mud guard. Besides, the downwardly projecting triangular shape permits easy accommodation of the helmet H in the storage box 81.

Furthermore, the swing arm 12 is provided which can be swung upward and downward about the pivot shaft 31 provided at a front end portion thereof, and the pivot shaft 31 is disposed between the engine 10 and the cushion 85. Therefore, the pivot shaft 31 can be compactly laid out through effective utilization of the space between the engine 10 and the cushion 85.

In addition, since the battery 82 is located between the pair of left and right seat frames 18, 18 so that the battery 82 and the seat frames 18, 18 overlap with each other in side view, the battery 82 can be effectively protected in the manner of covering it with the seat frames 18, 18.

Besides, the upper end 85a of the cushion 85 is connected to the cushion bracket 21a, the cross frame 25 is disposed with its upper surface 25b inclined rearwardly upward in side view, the battery 82 is laid out between the rear surface 21b of the cushion bracket 21a and the storage box front wall 90 of the storage box 81, and the rear surface 21b of the cushion bracket 21a and the storage box front wall 90 of the storage box 81 are disposed to be orthogonal to the upper surface 25b of the cross frame 25 in side view. Owing to this configuration, the space between the cushion bracket 21a and the storage box 81 having the downwardly projecting triangular shape can be secured in a large size, so that the battery 82 can be easily laid out.

Note that the above-described embodiment illustrates a mode for carrying out the present invention, and the invention is not limited to the above embodiment.

While the motorcycle 1 has been illustrated as an example of the saddle type vehicle in the description of the embodiment above, the present invention is not limited to this example. For example, the present invention may be applied to three-wheel saddle type vehicles having two front wheels or two rear wheels, or may be applied to saddle type vehicles having four or more wheels.
1: Motorcycle (Saddle type vehicle)
10: Engine
12: Swing arm (Rear arm)
13: Seat
18, 18: Seat frame (Frame)
21a: Cushion bracket
21b: Rear surface
25: Cross frame
25b: Upper surface
25c: Lower surface
31: Pivot shaft
41: Air cleaner case (Air cleaner)
56: Leg passing space
61: Front cover
80: Fuel tank
81: Storage box
82: Battery
82a: Upper surface (Upper surface of battery)
83: Regulator
85: Cushion
85a: Upper end
90: Storage box front wall (Front wall)
90d: Opening
95: Lid

## Claims

1. An electric component layout structure for a saddle type vehicle comprising a riding seat (13), a storage box (81) located under the seat (13) and rearward of a fuel tank (80), and a battery (82) supported on an upper surface (25b) of a cross frame (25) which connects a pair of left and right frames (18) to each other, wherein the fuel tank (80) is located under the seat (13),
an upper-face opening (81a) of the storage box (81) and the fuel tank(80) are covered by the seat (13) from above,
the storage box (81) has a downwardly projecting triangular shape in side view whereby a space is secured below a rear portion of the fuel tank (80) and forward of the storage box (81),
the battery (82) is disposed in the space,
and **characterized in that** a regulator (83) which rectifies a current to be supplied to the battery (82) is disposed on a lower surface (25c) of the cross frame (25), and
the cross frame (25) is disposed with the upper surface (25b) thereof inclined rearwardly upward in side view and is disposed to be orthogonal to a front wall (90) of the storage box (81) in side view.

2. The electric component layout structure for the saddle type vehicle according to claim 1, wherein the saddle type vehicle is a vehicle having a leg passing space (56), and an air cleaner (41) is disposed inside a front cover (61) located forward of the leg passing space (56).

3. The electric component layout structure for the saddle type vehicle according to claim 1 or 2,
wherein an upper end (85a) of a cushion (85) is disposed below the fuel tank (80) and forward of the battery (82).

4. The electric component layout structure for the saddle type vehicle according to any one of claims 1 to 3,
wherein a lid (95) is provided for covering an opening (90d) provided in the front wall (90) of the storage box (81), an upper surface (82a) of the battery (82) is disposed at such a position as to face the opening (90d), and the battery (82) is mountable and demountable by way of the opening (90d).

5. The electric component layout structure for the saddle type vehicle according to claim 3, wherein a rear arm (12) is provided which is swingable upward and downward about a pivot shaft (31) provided at a front end portion thereof, and the pivot shaft (31) is disposed between an engine (10) and the cushion (85).

6. The electric component layout structure for the saddle type vehicle according to any one of claims 1 to 5,
wherein the battery (82) is located between the pair of left and right frames (18), and the battery (82) and the frames (18) overlap with each other in side view.

7. The electric component layout structure for the saddle type vehicle according to claim 1, wherein an upper end (85a) of a cushion (85) is disposed below the fuel tank (80) and forward of the battery (82);
the upper end (85a) of the cushion (85) is connected to a cushion bracket (21a);
the battery (82) is disposed between a rear surface (21b) of the cushion bracket (21a) and the front wall (90) of the storage box (81); and
the rear surface (21b) and the front wall (90) are disposed to be orthogonal to the upper surface (25b) of the cross frame (25) in side view.

## Patentansprüche

1. Anordnungskonstruktion für ein elektrisches Bauteil für ein Fahrzeug vom Satteltyp, umfassend einen Fahrsitz (13), ein Aufbewahrungsfach (81), das unter dem Sitz (13) und hinter einem Kraftstofftank (80) angeordnet ist, und eine Batterie (82), die an einer oberen Fläche (25b) eines Querrahmens (25), der ein Paar aus einem linken und einem rechten Rahmen (18) miteinander verbindet, gehalten wird,
wobei der Kraftstofftank (80) unter dem Sitz (13) angeordnet ist,
eine Oberseitenöffnung (81a) des Aufbewahrungsfachs (81) und der Kraftstofftank (80) durch den Sitz (13) von oben abgedeckt sind,
das Aufbewahrungsfach (81) eine nach unten vorstehende Dreiecksform in einer Seitenansicht hat, wobei ein Raum unter einem hinteren Abschnitt des Kraftstofftanks (80) und vorderhalb des Aufbewahrungsfachs (81) gesichert ist,
die Batterie (82) in dem Raum angeordnet ist und
**dadurch gekennzeichnet, dass**
ein Regler (83), welcher einen Strom, der der Batterie (82) zuzuführen ist, gleichrichtet, an einer unteren Fläche (25c) des Querrahmens (25) angeordnet ist, und der Querrahmen (25) mit seiner oberen Fläche (25b) in einer Seitenansicht nach hinten oben geneigt angeordnet ist und so angeordnet ist, dass er in einer Seitenansicht orthogonal zu einer Vorderwand (90) des Aufbewahrungsfachs (81) ist.

2. Anordnungskonstruktion für ein elektrisches Bauteil für ein Fahrzeug vom Satteltyp gemäß Anspruch 1,
wobei das Fahrzeug vom Satteltyp ein Fahrzeug ist, welches einen Bein-Durchlass-Raum (56) hat, und ein Luftfilter (41) innerhalb einer Vorderverkleidung (61) angeordnet ist, die vor dem Bein-Durchlass-Raum (56) angeordnet ist.

3. Anordnungskonstruktion für ein elektrisches Bauteil für ein Fahrzeug vom Satteltyp gemäß Anspruch 1 oder 2,
wobei ein oberes Ende (85a) eines Dämpfers (85) unterhalb des Kraftstofftanks (80) und vor der Batterie (82) angeordnet ist.

4. Anordnungskonstruktion für ein elektrisches Bauteil für ein Fahrzeug vom Satteltyp gemäß einem der Ansprüche 1 bis 3,
wobei ein Deckel (95) vorgesehen ist, um eine Öffnung (90d) abzudecken, die in der Vorderwand (90) des Aufbewahrungsbehälters (81) vorgesehen ist, eine obere Fläche (82a) der Batterie (82) an einer solchen Position angeordnet ist, dass sie der Öffnung (90d) zugewandt ist, und die Batterie (82) mittels der Öffnung (90d) montiert werden und demontiert werden kann.

5. Anordnungskonstruktion für ein elektrisches Bauteil für ein Fahrzeug vom Satteltyp gemäß Anspruch 3,
wobei ein hinterer Arm (12) vorgesehen ist, welcher um eine Drehachse (31) nach oben und unten schwingend an einem vorderen Endabschnitt vorgesehen ist und die Drehachse (31) zwischen dem Motor (10) und dem Dämpfer (85) angeordnet ist.

6. Anordnungskonstruktion für ein elektrisches Bauteil für ein Fahrzeug vom Satteltyp gemäß einem der Ansprüche 1 bis 5,
wobei die Batterie (82) zwischen dem Paar von linken und rechten Rahmen (18) angeordnet ist und die Batterie (82) und der Rahmen (18) sich in einer Seitenansicht überlappen.

7. Anordnungskonstruktion für ein elektrisches Bauteil für ein Fahrzeug vom Satteltyp gemäß Anspruch 1,
wobei ein oberes Ende (85a) des Dämpfers (85) unter dem Kraftstofftank (80) und vor der Batterie (82) angeordnet ist;
das obere Ende (85a) des Dämpfers (85) mit einer Dämpferhalterung (21a) verbunden ist;
die Batterie (82) zwischen einer hinteren Fläche (21b) der Dämpferhalterung (21a) und der Vorderwand (90) des Aufbewahrungsbehälters (81); und
die hintere Fläche (21b) und die Vorderwand (90) so angeordnet sind, dass sie in einer Seitenansicht zu der oberen Fläche (25b) des Querrahmens (25) orthogonal sind.

## Revendications

1. Structure de topologie de composant électrique pour un véhicule de type à selle comprenant un siège de conduite (13), un coffret de rangement (81) situé sous le siège (13) et à l'arrière d'un réservoir de carburant (80), et une batterie (82) supportée sur une surface supérieure (25b) d'une traverse (25) qui raccorde une paire de cadres gauche et droit (18) l'un à l'autre,
dans laquelle le réservoir de carburant (80) est situé sous le siège (13),
une ouverture de face supérieure (81a) du coffret de rangement (81) et le réservoir de carburant (80) sont couverts par le siège (13) par le dessus,
le coffret de rangement (81) a une forme triangulaire dépassant vers le bas dans une vue de côté, moyennant quoi un espace est sécurisé en dessous d'une portion arrière du réservoir de carburant (80) et à l'avant du coffret de rangement (81),
la batterie (82) est disposée dans l'espace,
et **caractérisée en ce qu'**un régulateur (83) qui redresse un courant à fournir à la batterie (82) est disposé sur une surface inférieure (25c) de la traverse (25), et
la traverse (25) est disposée avec sa surface supérieure (25b) inclinée vers l'arrière en direction du haut dans une vue de côté et est disposée pour être orthogonale à une paroi avant (90) du coffret de rangement (81) dans une vue de côté.

2. Structure de topologie de composant électrique pour le véhicule de type à selle selon la revendication 1, dans laquelle le véhicule de type à selle est un véhicule ayant un espace de passage de jambe (56), et un filtre à air (41) est disposé à l'intérieur d'un cache avant (61) situé à l'avant de l'espace de passage de jambe (56).

3. Structure de topologie de composant électrique pour le véhicule de type à selle selon la revendication 1 ou 2,
dans laquelle une extrémité supérieure (85a) d'un amortisseur (85) est disposée sous le réservoir de carburant (80) et à l'avant de la batterie (82).

4. Structure de topologie de composant électrique pour le véhicule de type à selle selon l'une quelconque des revendications 1 à 3,
dans laquelle un couvercle (95) est ménagé pour couvrir une ouverture (90d) ménagée dans la paroi avant (90) du coffret de rangement (81), une surface supérieure (82a) de la batterie (82) est disposée en une position telle à être en regard de l'ouverture (90d), et la batterie (82) peut être montée et démontée au moyen de l'ouverture (90d).

5. Structure de topologie de composant électrique pour le véhicule de type à selle selon la revendication 3, dans laquelle un bras arrière (12) est ménagé, lequel peut être basculé vers le haut et vers le bas autour d'un arbre pivot (31) ménagé au niveau d'une portion d'extrémité avant de celui-ci, et l'arbre pivot (31) est disposé entre un moteur (10) et l'amortisseur (85).

6. Structure de topologie de composant électrique pour le véhicule de type à selle selon l'une quelconque des revendications 1 à 5,
dans laquelle la batterie (82) est située entre la paire de cadres gauche et droit (18), et la batterie (82) et les cadres (18) se chevauchent les uns les autres dans une vue de côté.

7. Structure de topologie de composant électrique pour le véhicule de type à selle selon la revendication 1, dans laquelle une extrémité supérieure (85a) d'un amortisseur (85) est disposée sous le réservoir de carburant (80) et à l'avant de la batterie (82) ;
l'extrémité supérieure (85a) de l'amortisseur (85) est raccordée à une équerre d'amortisseur (21a) ;
la batterie (82) est disposée entre une surface arrière (21b) de l'équerre d'amortisseur (21a) et la paroi avant (90) du coffret de rangement (81) ; et
la surface arrière (21b) et la paroi avant (90) sont disposées pour être orthogonales à la surface supérieure (25b) de la traverse (25) dans une vue de côté.
